# EUROPÄISCHE PATENTANMELDUNG

(11) **EP 1 291 109 A1**
(43) Veröffentlichungstag der Anmeldung: **12.03.2003**
(21) Anmeldenummer: 02019938.6
(22) Anmeldetag: 05.09.2002
(51) Int. Cl.: B23D 77/04, B23C 5/24

(54) **Schneidwerkzeug**

(30) Priorität: 10.09.2001 DE 10144514
(71) Anmelder: August Beck GmbH & Co., D-72474 Winterlingen (DE)
(72) Erfinder: Agarico, Jörg, 78351 Bodman-Ludwigshafen (DE)
(74) Vertreter: Kinkelin, Ulrich, Dipl.-Ing.

(57) **Zusammenfassung**

Die Erfindung betrifft ein Schneidwerkzeug, insbesondere Reib- und Senkwerkzeug, mit einem Grundkörper (14), an dem zumindest eine Schneide (12) durch zumindest ein Spannglied (31) auswechselbar durch Klemmung befestigt ist, wobei das zumindest eine Spannglied (31) eine an der Schneide (12) angreifende Spannfläche (36) und eine an dem Grundkörper (14) zugewandte Abstützfläche (37) aufweist, wobei die Klemmfläche (43) der Schneide (12) oder die Spannfläche (36) des zumindest einen Spanngliedes (31) und ein der Spannfläche (36) oder der Klemmfläche (43) gegenüberliegender Bereich der Abstützfläche (37) oder einer Anlagefläche (40) im Grundkörper (14) in einem Winkel von weniger als 60° zueinander angeordnet sind.

## Beschreibung

Die Erfindung betrifft ein Schneidwerkzeug, insbesondere Reib- und Senk-Schneidwerkzeug, gemäß dem Oberbegriff des Anspruchs 1.

Die Schneidwerkzeuge, insbesondere Reibwerkzeuge, werden zur Feinbearbeitung von Bohrungen eingesetzt. Die Qualität der Bohrung wird durch die exakte Führung der Führungsleisten sowie durch eine im Durchmesser einstellbare Schneide bestimmt.

Zur Feinbearbeitung werden Schneidwerkzeuge eingesetzt, bei denen eine Schneide über ein Spannglied auswechselbar an einem Grundkörper vorgesehen ist. Eine derartige Reibahle ist beispielsweise aus der DE 39 03 655 bekannt. Das Spannglied ist im wesentlichen dreieckförmig ausgebildet, wobei eine Kantenlänge des Dreiecks an der Schneide zur Klemmung angreift. Die weiteren Wände der Klemmpratze dienen als Anlagefläche in einer Ausfräsung, um das Spannglied in einer Klemmposition auszurichten. Die Spannschraube greift gegenüber der an der Schneide angreifenden Kante entfernt an dem Spannglied an. Der zwischen der an der Schneide anliegenden Kante und der Spannschraube wirkende Hebelarm erzeugt eine Biegespannung in dem Spannglied. Dadurch wird die wirksame Spannkraft reduziert. Darüber hinaus ist durch die Ausbildung des Spanngliedes ein relativ großer Spanraum erforderlich, wodurch der Grundkörper im Querschnitt gesehen geschwächt wird. Dies kann ebenfalls nachhaltig die Maßhaltigkeit der gefertigten Bohrung beeinflussen, da dies zu einer Unwucht im Werkzeug führt.

Aus der DE 197 08 601 ist des weiteren ein Schneidwerkzeug bekannt geworden, welches eine Schneide auswechselbar durch Klemmung mittels eines Spanngliedes aufnimmt. Das Spannglied greift an einer Kassette, welche die Schneide aufnimmt, oder an der Schneide direkt an. Das Spannglied zur Klemmung der Kassette oder Schneide weist im Querschnitt gesehen eine sehr spitzwinklig zulaufende Nase auf, an welcher eine Spannfläche vorgesehen ist. Die Spannschraube ist zur Klemmnase in Analogie zur DE 39 03 665 entfernt beabstandet, wodurch beim Einbringen einer Spannkraft über die Spannschraube in dem Spannglied eine Biegespannung erzeugt wird. Das Spannglied stützt sich auf den Grund der Aufnahme für das Spannglied ab. Bei dem Anziehen der Spannschraube bildet der Grund der Aufnahme für das Spannglied einen Anschlag. Dadurch treten die selben Nachteile wie bei der DE 39 03 655 auf. Darüber hinaus ist der für die Spannpratze und die Kassette zur Aufnahme der Schneide benötigte Raum zur Anordnung in dem Grundkörper beträchtlich, wodurch die Formstabilität des Grundkörpers, insbesondere bei Schneidwerkzeugen mit geringem Durchmesser, vermindert ist. Dies kann sich wiederum nachteilig auf die Maßhaltigkeit bei der Feinbearbeitung von Bohrungen auswirken.

Der Erfindung liegt deshalb die Aufgabe zugrunde, ein Schneidwerkzeug, insbesondere ein Reib- und Senkwerkzeug, zu schaffen, welches eine erhöhte Spannkraft bei geringer Biegespannung des Klemmelementes erzeugt und eine einfache und präzise Einstellung und Klemmung unter hoher Klemmkraft des Schneidelementes ermöglicht.

Diese Aufgabe wird erfindungsgemäß durch die Merkmale des Anspruchs 1 gelöst.

Durch die Ausgestaltung eines Schneidwerkzeuges mit zumindest einem Spannglied, welches eine an einer Schneide angreifende Spannfläche und eine Abstützfläche aufweist, die an einem einer Klemmfläche der Schneide gegenüberliegenden Bereich vorgesehen ist und in einem Winkel von weniger als 60° zur Spannfläche angeordnet ist, kann erzielt werden, daß eine erhöhte Spannkraft zur Klemmung der Schneide gegenüber bekannten Klemmungen eingebracht wird.

Das zumindest eine Spannglied ist im wesentlichen keilförmig oder flachkeilförmig ausgebildet und wird zwischen einer Anlagefläche des Grundkörpers und einer Klemmfläche der Schneide eingetrieben. Aufgrund des geringen Öffnungswinkels zwischen der Schneide und der Anlagefläche treten nur sehr kleine Hebelkräfte auf, welche nahezu keine Biegespannungen in dem Spannglied erzeugen, sondern es wirken im wesentlichen Druckkräfte auf das Spannglied. Dadurch kann die erhöhte Spannkraft bewirkt werden. Dies hat des weiteren zur Folge, daß eine feste und sichere Klemmung der Schneide in dem Grundkörper gegeben ist. Dadurch wird während der Feinbearbeitung von Bohrungen eine schwingungsberuhigte Bearbeitung ermöglicht. Dies führt wiederum zu einer hohen Qualität bei der Feinbearbeitung von Bohrungen.

Diese erfindungsgemäße Ausgestaltung eines Schneidwerkzeuges ist für mehrschneidige Werkzeuge mit und ohne Führungsleisten als auch für Einschneidenwerkzeuge mit und ohne Führungsleisten einsetzbar.

Die Winkelanordnung der Spannfläche zur Abstützfläche des zumindest einen Spanngliedes ist vorzugsweise in einem Bereich zwischen 1° und 60° vorgesehen. Dabei kann der eingeschlossene Winkel auch den Bereich der Selbsthemmung umfassen. Je kleiner der eingeschlossene Winkel wird, desto größer werden die durch das zumindest eine Spannglied auf die Schneide einwirkenden Klemmkräfte. Dadurch kann eine quasi einstückige Ausbildung der Schneide zum Grundkörper erzielt werden, wobei die Notwendigkeit der Auswechselfähigkeit aufgrund des Verschleißes der Schneide erhalten bleibt.

Nach einer vorteilhaften Ausgestaltung der Erfindung ist vorgesehen, daß zur Aufnahme des Spanngliedes eine Bohrung in dem Grundkörper vorgesehen ist, die an einen Aufnahmegrund der Schneidenaufnahme angrenzt oder diesen zumindest teilweise schneidet. Dadurch wird ermöglicht, daß die durch die Spannschraube erzeugte Spannkraft, welche über das Spannglied auf die Schneide übertragen wird, möglichst nahe zum Angriffspunkt der Spannfläche an der Klemmfläche der Schneide gelegt wird, um die Hebelarme zu verringern. Gleichzeitig kann dadurch eine kompakte Anordnung erzielt werden, welche insbesondere bei Werkzeugen mit kleinem Durchmesser von Vorteil ist, da ein hinreichend großer Querschnitt des Grundkörpers erhalten bleibt.

Bevorzugt weist der Aufnahmegrund der Schneide im Bereich des Spanngliedes einen Steg von weniger als 2 mm auf. Dadurch kann eine zusätzliche Verkleinerung des Spanraumes ermöglicht werden und die Kraftaufnahme im Grundkörper verbessert sein.

Vorzugsweise ist das Spannglied als ein zylindrischer Körper ausgebildet, welcher eine in einer Ebene liegende Schrägfläche als Spannfläche aufweist. Durch diese Ausgestaltung ist eine einfache Geometrie des Spanngliedes geschaffen, welches in der Herstellung kostengünstig ist. Gleichzeitig können die hohen Klemmkräfte übertragen werden.

Die Spannfläche ist vorzugsweise als ein Anschnitt mit einem spitzen Winkel als eine durchgehende Schrägfläche über die gesamte Dicke des Spanngliedes ausgebildet. Dadurch kann auch ein im Querschnitt gesehen stabiles und druckaufnahmefähiges Spannglied geschaffen sein. Zusätzlich wird durch die an das Spannglied angepaßte Bohrung zur Aufnahme des Spannglieds ermöglicht, daß das Spannglied quasi vollständig diesen Raum ausfüllt und bei eingesetztem Spannglied sich eine quasi geschlossene Randfaser von dem Grundkörper über die Schneide durch das Spannglied hindurch über die Abstützfläche und die Anlagefläche des Grundkörpers in den sich daran wiederum anschließenden Bereich des Grundkörpers ergibt.

Nach einer weiteren vorteilhaften Ausgestaltung der Erfindung ist vorgesehen, daß die Spannfläche des Spanngliedes nahezu parallel oder in einem sehr kleinen Winkel an der Klemmfläche der Schneide angreift. Dadurch wird die Klemmwirkung bei Beibehaltung einfacher Geometrien erhöht. Die Schneide erfährt gleichzeitig bei Einbringung der Spannkraft zumindest eine geringe radial nach innen gerichtete Kraftwirkung, um eine gesicherte Aufnahme zu erzielen. Darüber hinaus kann durch die Ausgestaltung der Schrägfläche als Spannfläche eine größere Angriffsfläche an der Klemmfläche der Schneide gegeben sein. Dadurch kann erzielt werden, daß die Kraftnormale der Spannfläche und die Kraftnormale der Abstützfläche in einem Winkel von beispielsweise 150 bis nahezu 180° angeordnet sind, so daß diese quasi entgegengesetzt ausgerichtet sind und dadurch nahezu ausschließlich Druckkräfte übertragen. Diese alternative Anordnung kann auch zwischen der Abstützfläche des Spanngliedes und der Anlagefläche des Grundkörpers vorgesehen sein.

Nach einer weiteren vorteilhaften Ausgestaltung der Erfindung ist vorgesehen, daß die Abstützfläche des Spanngliedes in einer Bohrung im Grundkörper geführt ist und in einem Bereich von wenigstens 180° umgeben ist. Durch diese Ausgestaltung ist das Spannglied teilweise oder im wesentlichen vollständig umgeben. Dadurch kann der Bereich für die Abstützung wesentlich erhöht sein. Zusätzlich ist der Aufnahmebereich für das Spannglied durch das Spannglied selbst vollständig geschlossen, so daß der Spanraum in diesem Bereich geschlossen ist und einen ungehinderten Abtransport der Späne ermöglicht.

Des weiteren ist vorteilhafterweise vorgesehen, daß das Spannglied mit seiner äußeren Stirnfläche bündig zum Spangrund oder geringfügig unterhalb des Spangrundes im Spanraum angeordnet ist. Dadurch wird eine gute Spanabfuhr beibehalten.

Eine bevorzugte Ausgestaltung sieht vor, daß die Bohrungsachse der Spannschraube für das Spannglied parallel zur Abstützfläche oder Anlagefläche verläuft. Dadurch sind einfache geometrische Verhältnisse gegeben, welche auch eine kostengünstige Herstellung ermöglichen.

Alternativ ist vorgesehen, daß die Bohrungsachse der Spannschraube entlang der Klemmfläche der Schneide verläuft oder in einer beliebigen Winkelposition zwischen der Spannfläche und der Abstützfläche oder der Anlagefläche des Spanngliedes vorgesehen ist. In Abhängigkeit der Größe des Grundkörpers, der Größe der Schneide und der aufzubringenden Spannkräfte kann die Ausrichtung der Bohrungsachse der Spannschraube angepaßt sein.

Beispielsweise kann die Spannschraube entlang der Winkelhalbierenden zwischen der Spannfläche oder Klemmfläche und Abstützfläche oder Anlagefläche angeordnet sein, so daß der Abstand zwischen Bohrungsachse zur Spannfläche und Abstützfläche als auch Klemmfläche oder Anlagefläche gleich ausgebildet ist.

Das Spannglied ist in einer Klemmposition bevorzugt mit Abstand zum Bohrungsgrund der Aufnahme des Spanngliedes angeordnet. Dadurch werden definierte Kraftverhältnisse erzielt. Das Spannglied stützt sich ausschließlich zwischen der Klemmfläche der Schneide und der Abstützfläche ab, ohne daß weitere Krafteinleitungen gegeben sind.

Nach einer weiteren vorteilhaften Ausgestaltung der Erfindung ist vorgesehen, daß die Breite der an der Schneide angreifenden Spannfläche kleiner als die Hälfte der Schneidenlänge ausgebildet ist. Diese Größe der Spannfläche ist hinreichend für eine hohe Klemmkraft zur Positionierung der Schneide in der Schneidenaufnahme. Dadurch können die aus dem Grundkörper herausgearbeiteten Volumen gering gehalten werden, wodurch die Steifigkeit des Grundkörpers wiederum erhöht wird. Dies hat die Erhöhung der Bearbeitungsqualität der Bohrung zur Folge.

Beim Spannen des Spanngliedes ist als Verdrehsicherung vorteilhafterweise vorgesehen, daß die Bohrungsachse der Spannschraube exzentrisch im zylindrischen Spannglied vorgesehen ist.

Bevorzugte Ausführungsbeispiele der Erfindung sind in der nachfolgenden Beschreibung, den Zeichnungen und Patentansprüchen angegeben. Es zeigen:
- Figur 1: eine perspektivische Ansicht eines Schneidwerkzeuges,
- Figur 2: einen schematischen Querschnitt des Schneidwerkzeuges entlang der Linie II-II in Figur 1,
- Figur 3: einen schematischen Querschnitt eines Schneidwerkzeuges entlang der Linie III-III in Figur 1,
- Figur 4: einen vergrößerten Querschnitt einer Schneidenklemmung gemäß Figur 3 und
- Figur 5: eine vergrößerte Darstellung im Querschnitt einer alternativen Schneidenklemmung zu Figur 4.

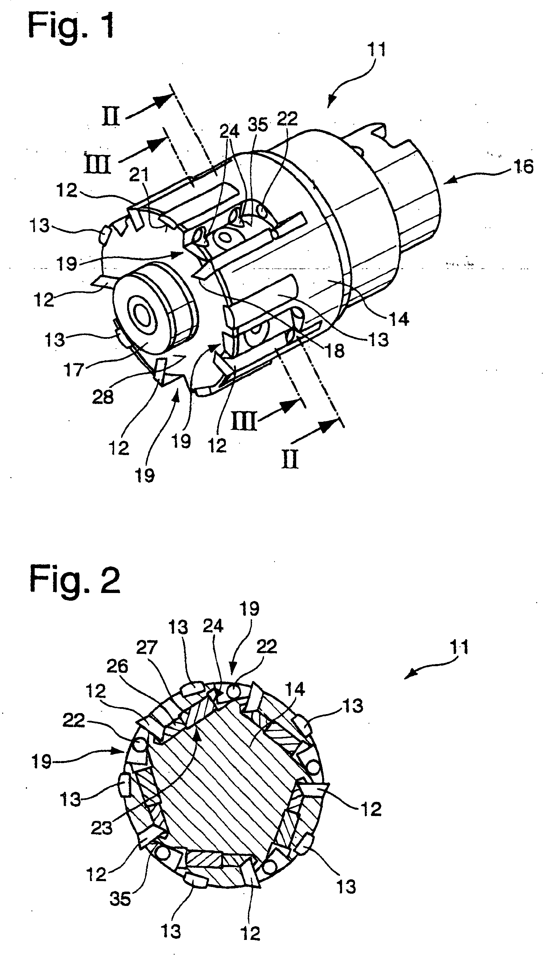

In Figur 1 ist ein Schneidwerkzeug 11 perspektivisch dargestellt. Beispielsweise ist eine Reibahle als Mehrschneidenreibahle dargestellt, welche fünf Schneiden 12 aufweist, denen um 180° versetzt jeweils eine Führungsleiste 13 zugeordnet ist. Das Schneidwerkzeug 11 kann alternativ als Ein-, Zwei- oder Mehrschneidenwerkzeug mit und ohne Führungsleisten ausgebildet sein. Das Schneidwerkzeug 11 weist einen Grundkörper 14 auf, der an einem Ende in eine Werkzeugaufnahme 16 übergeht. Auf einer gegenüberliegenden Stirnseite ist eine Rundlaufkontrollstelle 17 fakultativ vorgesehen. In dem Grundkörper 14 ist in einer nutenförmigen Schneidenaufnahme 18 die Schneide 12 auswechselbar vorgesehen. An diese Schneide 12 schließt sich in Drehrichtung davor ein Spanraum 19 an. Des weiteren ist in Drehrichtung dahinter eine Führungsleiste 13 fest in einer Aufnahme 21 durch Lötung oder dergleichen vorgesehen. Die Führungsleisten können auch, vorzugsweise in einer Kassette, austauschbar vorgesehen sein. Die Führungsleisten 13 sind bei einem mehrschneidigen Werkzeug gemäß Figur 1 der Schneide gegenüberliegend zugeordnet. Bei einem einschneidigen Werkzeug sind beispielsweise zwei Führungsleisten vorgesehen, wobei eine um 180° versetzt zur Schneide und die zweite um beispielsweise 45° der Schneide nacheilend angeordnet ist. Alternativ können auch bei einem Einschneider als auch bei einem Zwei- oder Mehrschneider drei oder mehr Führungsleisten über den Umfang verteilt vorgesehen sein, wobei die Anzahl der Führungsleisten von der Anzahl der Schneiden auch abweichen kann.

In den Spanraum 19 mündet eine Bohrung 22, welche einen Kühl- und/oder Schmierstoff zuführt, so daß einerseits der Spanraum 19 ausgespült und andererseits die Schneide mit einer Kühl- und/oder Schmieremulsion versorgt wird. Der Spanraum 19 ist beispielsweise durch eine flache Einfräsung ausgebildet, dessen Tiefe im Ausführungsbeispiel dadurch bestimmt ist, daß eine Zugänglichkeit zu einem Stellglied 23 gegeben ist. Das Stellglied 23 ist in einer Bohrung 24 vorgesehen, welche bis zur nächstfolgenden Schneidenaufnahme 18 sich erstreckt. Das Stellglied 23 umfaßt einen zylindrischen Bolzen 26 mit einer Abflachung, welche unterhalb der Schneide 13 anliegt und einen Gewindestift 27, durch den der Bolzen 26 in Richtung Schneide 13 bewegt werden kann. Durch das Stellglied 23 kann die Schneide 13 in einer radialen Position auf den zu bearbeitenden Durchmesser eingestellt werden.

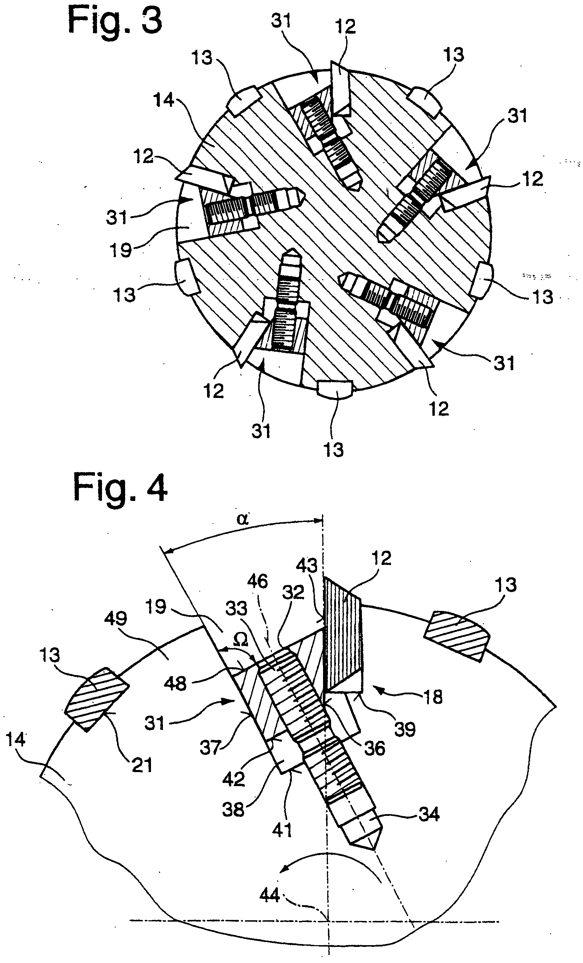

In Figur 3 ist ein Querschnitt des Schneidwerkzeuges 11 entlang der Linie III-III in Figur 1 dargestellt. Ein vergrößerter Ausschnitt der Schneidenklemmung in Figur 3 geht aus Figur 4 hervor. Die Schneide 12 ist in der Schneidenaufnahme 18 positioniert und wird durch Klemmung mit einem Spannglied 31 in dieser Position auswechselbar gehalten. Das Spannglied 31 weist eine Bohrung 32 zur Aufnahme einer Spannschraube 33 auf, welche in eine Bohrung 34 des Grundkörpers 14 eingreift. Die Bohrung 34 kann alternativ auch als Durchgangsbohrung ausgebildet sein. Die Bohrung 34 ist zwischen den zwei Stellgliedern 23 zur Aufnahme des Spanngliedes 31 vorgesehen. Alternativ kann vorgesehen sein, daß das Spannglied 31 außerhalb der Stellglieder 23 vorgesehen ist, beispielsweise nahe einer Eingriffszone der Schneide 12. Die Bohrung 34 zur Aufnahme des Spanngliedes 31 ist also unmittelbar an eine Stirnfläche 28 angrenzend vorgesehen. Die Eingriffszone der Schneide 12 ist bei Reibahlen durch den vorderen kurzen Schneidenabschnitt, der Hauptschneide, nahe der Stirnfläche 28 gebildet. Durch die Hauptschneide wird im wesentlichen die Bohrung auf Maß bearbeitet. Der lange Schneidenabschnitt, der sich parallel zur Längsachse 44 der Reibahle erstreckt, ist die Nebenschneide, welche nur einen geringen oder nahezu keinen Spanabtrag bewirkt. Die Spannschraube 33 ist beispielsweise als gegenläufiges Doppelgewinde ausgebildet, wodurch erzielt wird, daß bei einer Umdrehung der Spannschraube 33 der doppelte Zustellweg des Spanngliedes 31 erzielt wird. Des weiteren kann die Spannschraube 33 anstelle einer Differentialschraube auch als Schraube mit einem Schraubenkopf vorgesehen sein, der an einer Stufenbohrung des Spanngliedes 31 angreift.

Das Spannglied 31 weist eine an der Schneide 12 angreifende Spannfläche 36 auf. Diese Spannfläche 36 ist als Schrägfläche ausgebildet, welche sich über die gesamte Dicke des Spanngliedes 31 erstreckt, das aus einem zylindrischen Vollmaterial hergestellt ist. Der Spannfläche 36 gegenüberliegend ist eine Abstützfläche 37 vorgesehen. Die Abstützfläche 37 entspricht der Mantelfläche des Spanngliedes 31, welches in einer Bohrung 38 eingesetzt und geführt ist. Diese Bohrung 38 wird über den Spanraum 19 in den Grundkörper 14 eingebracht. Die Bohrung 38 schneidet einen Boden 39 der Schneidenaufnahme 18, wodurch ermöglicht ist, daß die Bohrung 38 nahe zur Schneide 12 positioniert ist. Vorteilhafterweise ist der verbleibende Steg des Bodens 39 kleiner als 2 mm ausgebildet. Die Ausnehmung im Boden 39 ist aufgrund der Auflage der Schneiden an Schrägflächen der Bolzen 26 des Stellgliedes 23 vernachlässigbar.

Ein Bohrungsgrund 41 der Bohrung 38 ist gegenüber dem Boden 39 der Schneidenaufnahme 18 tiefer angeordnet, so daß das Spannglied 31 in einer Klemmposition mit einer inneren Stirnfläche 42 nicht zur Anlage auf dem Bohrungsgrund 41 kommt.

Die Schneide 12 gemäß Figur 4 weist eine Klemmfläche 43 auf, welche sich radial zur Längsachse 44 erstreckt. Die Abstützfläche 37 für das Spannglied 31 ist in einem Winkel α zur Spannfläche 36 kleiner als 60° angeordnet. Vorzugsweise ist ein Winkel von kleiner 40° oder 30° vorgesehen. Der Abstützfläche 37 gegenüberliegend ist eine Spannfläche 36 vorgesehen, die in der Klemmposition geringfügig gegenüber der Klemmfläche 43 der Schneide 12 geneigt ist, so daß zumindest eine geringe Kraftkomponente radial nach innen gerichtet ist, welche auf die Schneide 12 wirkt. Die Bohrungsachse 46 der Bohrung 32 ist im Ausführungsbeispiel gemäß Figur 4 im wesentlichen parallel zur Abstützfläche 37 und Anlagefläche 40 vorgesehen. Gleichzeitig ist die Bohrung 32 außermittig zum Durchmesser des Spanngliedes 31, wie aus einer Draufsicht auf den Spanraum 19 hervorgeht, vorgesehen, wodurch eine Verdrehsicherung beim Spannen des Spanngliedes 31 gegeben ist. Die Spannfläche 36 des Spanngliedes 31 wird durch die Abtrennung eines Kreissegmentes unter einem Winkel hergestellt. Daraus ergibt sich die Länge der Spannfläche 36, welche an der äußeren Stirnfläche 48 des Spanngliedes 31 angrenzt.

Der äußere Durchmesser des Spanngliedes 31 entspricht der Bohrung 38. Dadurch wird das Spannglied 31 mit Ausnahme des angrenzenden beziehungsweise sich öffnenden Bereiches durch die Schneidenaufnahme 18 vollständig von der Bohrung 38 umgeben. Die Abstützfläche 37 kann an einer Anlagefläche 40, welche Teil einer Bohrung 38 gemäß dem Ausführungsbeispiel ist, zumindest linienförmig anliegen. Sofern die Anlagefläche 40 Teil einer Bohrung 38 ist, kann diese sich auch über einen größeren Bereich erstrecken. Durch die dargestellte Ausbildung des Spanngliedes 31 wird die Bohrung 38 quasi vollständig wieder ausgefüllt, so daß ein ebener Spanraumgrund 35 ausgebildet ist. Dies weist den Vorteil auf, daß eine geringe Unwucht in dem Grundkörper 14 entsteht. Der zwischen der Anlagefläche 40 und der äußeren Stirnfläche 48 gebildete Winkel kann somit gleich, größer oder kleiner 90° ausgebildet sein und beispielsweise an den Spanraumgrund 35 angepaßt sein. Die geometrischen Verhältnisse, welche zur erhöhten Spannkraft beitragen, bleiben unabhängig der Ausbildung des Spanraumes erhalten.

Die Dicke des Spanngliedes 31 ist vorteilhafterweise derart ausgestaltet, daß die äußere Stirnfläche 38 in Klemmposition bündig zu dem Spanraumgrund 35 verläuft. Der sich öffnende Winkelbereich für den Spanraum 19 kann an den angeschlossenen Winkel zwischen der Klemmfläche 43 und der Abstützfläche 37 angepaßt sein. Dadurch kann an dem Grundkörper 14 der Stützbereich 49 ausgebildet sein, wodurch eine Erhöhung des prozentualen Anteiles des Vollmaterials im Querschnitt gesehen am Grundkörper 14 gegeben ist. Des weiteren kann bei dem Klemmen der Schneide 12 ein Aufweiten des Grundkörpers 14 durch das Spannglied 31 verhindert sein.

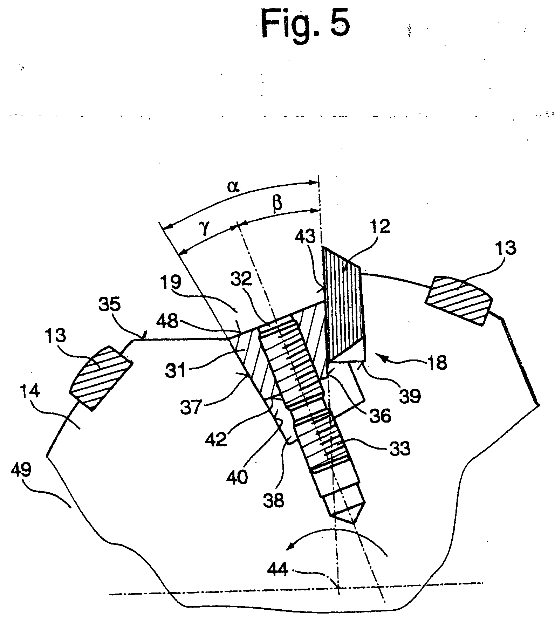

Alternativ zu der in Figur 4 dargestellten Ausführungsform kann gemäß Fig. 5 das Spannglied 31 eine Spannfläche 36 und eine Abstützfläche 37 aufweisen, welche in einem spitzen Winkel zu der Klemmfläche 43 und dem Bohrungsmantel der Bohrung 38 angeordnet ist. Die Bohrungsachse 46 des Spanngliedes 31 kann in der Winkelhalbierenden zwischen der Klemmfläche 43 und der Abstützfläche 37 liegen. Bei dieser Ausführungsform sind die Winkel γ und β gleich groß. Dadurch kann ebenfalls die Aufbringung einer hohen Spannkraft gegeben sein.

Des weiteren kann vorgesehen sein, daß die Abstützfläche 37 des Spanngliedes 31 parallel zur Mantelfläche, also zur Anlagefläche 40 der Bohrung 38 verläuft und die Bohrungsachse 46 im Spannglied 31 nicht parallel zur Abstützfläche 37 vorgesehen ist. In Abhängigkeit der Materialien und Größenverhältnisse von Grundkörper 14 und Spannglied 31 können hieraus ebenso optimale Klemmverhältnisse geschaffen sein.

Des weiteren kann vorteilhafterweise vorgesehen sein, daß die Abstützfläche 37 und die Spannfläche 36 in einem Winkel der Selbsthemmung angeordnet sind. Durch die Einbringung der Spannkraft über die Spannschraube 32 ist die Auswechselbarkeit der Schneide 12 gegeben. Im Bereich der Selbsthemmung können die auf die Spannfläche 36 und die Abstützfläche 37 wirkenden Spannkräfte einen größeren Winkel aufspannen, wodurch eine höhere Kraftübertragung gegeben ist.

Auch kann vorgesehen sein, daß die Winkel γ und β in der Größe beliebig variabel ausgestaltet sein können, wobei deren Summe gleich oder kleiner dem Winkel α ist. Die Lage der Winkelhalbierenden kann parallel oder winklig zur Abstützfläche 37, Spannfläche 36, Klemmfläche 43 oder Anlagefläche 40 ausgebildet sein.

Des weiteren kann das Spannglied 31 eine parallel zur Anlagefläche 40 verlaufende Abstützfläche 37 aufweisen oder in einem spitzen Winkel hierzu vorgesehen sein. Diese beiden Alternativen können beliebig mit einer Anordnung der Spannfläche 36 zur Klemmfläche 43 gewählt sein, welche sowohl eine parallele Anlage als auch eine spitzwinklige Anordnung umfassen können. Die Winkellage des Spanngliedes 31 kann durch die Winkel γ oder β frei bestimmt sein.

In Fig. 5 ist eine alternative Anordnung eines Spanraumes 19 zu Fig. 4 dargestellt. Beispielsweise kann die äußere Stirnfläche 48 in der Verlängerung eines Spanraumgrundes 35 liegen, der gemäß Fig. 5 vergrößert ausgebildet ist. In Abhängigkeit des Anwendungsfalles kann der vergrößerte Spanraum 19 zum Einsatz kommen. Sobald der Spanraumgrund 35 beispielsweise in einer Winkellage angeordnet ist, um einen noch größeren Spanraum 19 zu bilden, kann die äußere Stirnfläche 48 wiederum bündig daran angepaßt sein.

Die vorgenannten Ausführungen gelten auch für Schneiden, welche eine geringfügig geneigte Klemmfläche gegenüber der Schneidenanlagefläche in der Schneidenaufnahme 18 aufweisen. Die obigen Ausführungen gelten ebenfalls für Wendeschneidplatten und anderen Schneidetyp, welche für Schneid-, Reib- und Senkwerkzeuge eingesetzt werden.

## Patentansprüche

1. Schneidwerkzeug, insbesondere Reib- und Senkwerkzeug, mit einem Grundkörper (14), an dem zumindest eine Schneide (12) durch zumindest ein Spannglied (31) auswechselbar durch Klemmung befestigt ist, wobei das zumindest eine Spannglied (31) eine an der Schneide (12) angreifende Spannfläche (36) und eine an dem Grundkörper (14) zugewandte Abstützfläche (37) aufweist, **dadurch gekennzeichnet, daß** die Klemmfläche (43) der Schneide (12) oder die Spannfläche (36) des zumindest einen Spanngliedes (31) und ein der Spannfläche (36) oder der Klemmfläche (43) gegenüberliegender Bereich der Abstützfläche (37) oder einer Anlagefläche (40) im Grundkörper (14) in einem Winkel von weniger als 60° zueinander angeordnet sind.

2. Schneidwerkzeug nach Anspruch 1, **dadurch gekennzeichnet, daß** zur Aufnahme des Spanngliedes (31) eine Bohrung (38) in dem Grundkörper (14) vorgesehen ist, die an einen Boden (39) der Schneidenaufnahme (18) angrenzt oder diesen zumindest teilweise schneidet.

3. Schneidwerkzeug nach Anspruch 2, **dadurch gekennzeichnet, daß** der Boden (39) der Schneidenaufnahme (18) im Bereich zur Aufnahme des Spanngliedes (31) einen Steg, vorzugsweise von weniger als 2 mm, aufweist.

4. Schneidwerkzeug nach einem der vorhergehenden Ansprüche, **dadurch gekennzeichnet, daß** das Spannglied (31) ein zylindrischer Körper ist, welcher eine in einer Ebene liegende Schrägfläche als Spannfläche (36) aufweist, die sich vorzugsweise über die gesamte Höhe des Spanngliedes (31) erstreckt.

5. Schneidwerkzeug nach einem der vorhergehenden Ansprüche, **dadurch gekennzeichnet, daß** die Spannfläche (36) des Spanngliedes (31) parallel, nahezu parallel oder in einem sehr kleinen Winkel an der Klemmfläche (43) angreift.

6. Schneidwerkzeug nach einem der vorhergehenden Ansprüche, **dadurch gekennzeichnet, daß** die Abstützfläche (37) parallel, nahezu parallel oder in einem sehr kleinen Winkel an der Anlagefläche (40) im Grundkörper (14) angreift.

7. Schneidwerkzeug nach einem der vorhergehenden Ansprüche, **dadurch gekennzeichnet, daß** die Abstützfläche (37) des Spanngliedes (31) in einer Bohrung (38) im Grundkörper (14) geführt ist.

8. Schneidwerkzeug nach Anspruch 7, **dadurch gekennzeichnet, daß** das Spannglied (31) vorzugsweise um wenigstens 180° von der Bohrung (38) umgeben ist.

9. Schneidwerkzeug nach Anspruch 7 und 8, **dadurch gekennzeichnet, daß** das Spannglied (31) mit Ausnahme der Spannfläche (36) vollständig von der Bohrung (38) umgeben ist.

10. Schneidwerkzeug nach einem der vorhergehenden Ansprüche, **dadurch gekennzeichnet, daß** das Spannglied (31) in einer Klemmposition bündig oder unterhalb des Spanraumgrundes (35) positioniert ist.

11. Schneidwerkzeug nach einem der vorhergehenden Ansprüche, **dadurch gekennzeichnet, daß** die Bohrungsachse (46) der Spannschraube (33) im Spannglied (31) parallel zur Abstützfläche (37) oder Anlagefläche (40) vorgesehen ist.

12. Schneidwerkzeug nach einem der Ansprüche 1 bis 10, **dadurch gekennzeichnet, daß** die Bohrungsachse (46) der Spannschraube (33) dem Spannglied (31) entlang einer Winkelhalbierenden zwischen der Spannfläche (36) und der Abstützfläche (37) oder Anlagefläche (40) verläuft.

13. Schneidwerkzeug nach einem der Ansprüche 1 bis 10, **dadurch gekennzeichnet, daß** die Bohrungsachse (46) der Spannschraube (33) in einem beliebigen Winkel γ oder βzwischen der Spannfläche (36) und der Abstützfläche (37) oder Anlagefläche (40) vorgesehen ist, wobei die Summe der Winkel γ und β gleich oder kleiner als der Winkel α ist.

14. Schneidwerkzeug nach einem der vorhergehenden Ansprüche, **dadurch gekennzeichnet, daß** eine innere Stirnfläche (42) des Spanngliedes (31) in einer Klemmposition mit Abstand zum Bohrungsgrund (41) der Bohrung (38) angeordnet ist.

15. Schneidwerkzeug nach einem der vorhergehenden Ansprüche, **dadurch gekennzeichnet, daß** die Breite der an der Schneide (12) angreifenden Spannfläche (36) kleiner als die Hälfte der Schneidenlänge ausbildet ist.

16. Schneidwerkzeug nach einem der vorhergehenden Ansprüche, **dadurch gekennzeichnet, daß** die Bohrungsachse (46) der Spannschraube (33) exzentrisch im zylindrischen Spannglied (31) vorgesehen ist.

17. Schneidwerkzeug nach einem der vorhergehenden Ansprüche, **dadurch gekennzeichnet, daß** das zumindest eine Spannglied (31) zwischen den die Schneide (12) in radialer Position einstellenden Stellglieder (23) vorgesehen ist.

18. Schneidwerkzeug nach einem der vorhergehenden Ansprüche 1 bis 16, **dadurch gekennzeichnet, daß** das Spannglied (31) nahe einer Stirnfläche (28) im Eingriffsbereich der Schneide (12) vorgesehen ist.
